# EUROPEAN PATENT SPECIFICATION

(11) **EP 1 566 103 B1**
(45) Date of publication and mention of the grant of the patent: **03.06.2009**
(21) Application number: 05002902.4
(22) Date of filing: 11.02.2005
(51) Int. Cl.: A23B 7/015, A23B 9/06, A23L 3/28

(54) **Method and device for converting ethylene in ethane and freshness keeping apparatus for fresh agricultural product**
Vorrichtung und Verfahren für die Umsetzung von Ethen in Ethan und Frischhalteapparat für frische landwirtschaftliche Güter
Appareil et procédé de conversion d'éthylène en éthane et appareil de maintien de la fraîcheur de produits agricoles frais

(30) Priority: 18.02.2004 JP 2004041925; 24.12.2004 JP 2004372436
(43) Date of publication of application: 24.08.2005
(73) Proprietor: Daikoh Shoji Corporation, Utunomiya-shi, Tochigi-ken (JP); Nagasawa, Takeshi, Ashikaga-shi, Tochigi-ken (JP)
(72) Inventor: Iwasaki, Kenichi, Utunomiya-shi Tochigi-ken (JP); Nagasawa, Takeshi, Ashikaga-shi Tochigi-ken (JP)
(74) Representative: Tomerius, Isabel

(56) References cited:
- PATENT ABSTRACTS OF JAPAN vol. 018, no. 582 (C-1270), 8 November 1994 (1994-11-08) -& JP 06 217685 A (NIPPONDENSO CO LTD), 9 August 1994 (1994-08-09)
- PATENT ABSTRACTS OF JAPAN vol. 016, no. 501 (C-0996), 16 October 1992 (1992-10-16) & JP 04 187044 A (MITSUBISHI HEAVY IND LTD), 3 July 1992 (1992-07-03)
- PATENT ABSTRACTS OF JAPAN vol. 1997, no. 11, 28 November 1997 (1997-11-28) -& JP 09 196545 A (DAIWA JITSUGYO KK), 31 July 1997 (1997-07-31)
- PATENT ABSTRACTS OF JAPAN vol. 2002, no. 11, 6 November 2002 (2002-11-06) & JP 2002 204653 A (TOSHIBA LIGHTING & TECHNOLOGY CORP), 23 July 2002 (2002-07-23)
- PATENT ABSTRACTS OF JAPAN vol. 1996, no. 06, 28 June 1996 (1996-06-28) & JP 08 038040 A (MITSUBISHI HEAVY IND LTD), 13 February 1996 (1996-02-13)
- PATENT ABSTRACTS OF JAPAN vol. 1996, no. 10, 31 October 1996 (1996-10-31) -& JP 08 154572 A (MITSUBISHI HEAVY IND LTD), 18 June 1996 (1996-06-18)
- PATENT ABSTRACTS OF JAPAN vol. 1996, no. 04, 30 April 1996 (1996-04-30) & JP 07 313130 A (TADASHI MOCHIHATA; others: 03), 5 December 1995 (1995-12-05)

## Description

### TECHNICAL FIELD

This invention relates to a method for generating OH radicals in the water droplets with ultra-violet rays and modifying ethylene gas into ethane and water with the OH radicals, an ethylene gas modifying device for carrying out the method and a freshness keeping device using the ethylene gas modifying device, modifying ethylene gas harmful against holding of freshness discharged out of the fresh agricultural product into a storehouse with the ethylene gas modifying device into non-harmful ethane and water to enable a freshness of the fresh agricultural product to be kept for a long period of time.

### BACKGROUND ART

When the fresh agricultural product is kept in a container for a long period of time, the freshness is reduced by ethylene gas generated in itself or its putrefaction is promoted.

In order to prevent this phenomenon, gas adsorption material such as active carbon and the like has been put in the storehouse to adsorb and remove ethylene gas from it.

However, continuous usage of gas adsorption material such as active carbon or the like causes an adsorption performance to be decreased and the material must be properly replaced with a new one with the result that this management for it has been remarkably troublesome.

In view of the foregoing state, it has been proposed to provide a method (refer to the Patent Document 1) for decomposing ethylene gas through an electrical plasma discharging by applying a high voltage to an electrode in separate from countermeasure against such ethylene gas and concurrently diminishing various kinds of germs held on the fresh agricultural product with a sterilizing power of ozone generated to eliminate a cause of putrefaction and keeping a freshness.

The freshness keeping device for a fresh agricultural product in accordance with that method requires a generation of ozone, a large-scaled device for applying a high voltage current and a large number of consumption of electrical power with the result that a maintenance and management cost for the device becomes high. Further, applying a high voltage current caused a plasma light emitting state and a heat generating state to be generated and had a problem that a temperature of freezer to be cooled or storehouse was inversely increased.

Further, the generated ozone has an effect for sterilizing putrefaction germs and in turn generates a decoloring change in food to reduce an outer appearance of the food and an occurrence of large number of ozone may influence badly against a human body. Due to this fact, it was not preferable that the device using such ozone as above is utilized as a home-use storing storehouse for a fresh agricultural product as it is.

In addition, when ethylene gas was decomposed with a plasma electrical discharging, there was a possibility that hydrogen gas was generated through its decomposing reaction, hydrogen stored in the storehouse was fired with plasma and exploded.

### Patent Document 1:

Japanese Patent Non-Examined Publication No.2000-139198

### DISCLOSURE OF INVENTION

The present invention has been invented in order to eliminate the difficulty found in a countermeasure against ethylene gas through a plasma discharging in the prior art and provides a method and a device for generating OH radicals in the water droplets by irradiating the ultra-violet rays showing a less amount of power consumption and modifying effectively ethylene gas into ethane and water with the OH radicals, and a compact, safe freshness keeping device showing a less consumption power capable of modifying ethylene gas harmful against keeping of the freshness released from the agricultural product into the storehouse under application of the former device and keeping the freshness of the fresh agricultural product for a long period of time.

In order to eliminate the aforesaid problem, the ethylene gas modifying method with ultra-violet rays of the present invention comprises the steps of retaining water by supplying water to a water retention member formed with a water retention surface capable of holding water in particle form at its surface and holding said water retention surface in a state wetted by water droplets; irradiating the ultra-violet rays with a wavelength of 254 nm said water droplets held on said water retention surface from a near distance within 10 mm while controlling its nearby temperature in a temperature range of 10°C to 40°C so as to generate OH radical in said water droplets with an energy of said irradiated ultra-violet rays; and reacting step for aerating gas containing ethylene gas against said water retention surface holding said water droplets containing said OH radical to contact said ethylene gas with said OH radical characterized in that said ethylene gas is contacted and reacted with said OH radical through each of said steps to enable it to be modified into ethane and water.

The invention according to claim 2 is characterized in that the water retention member is an aeration water retention member having many fine holes passed through its front and rear surfaces in the aforesaid configuration, OH radical and ethylene gas can be contacted each other by passing gas containing ethylene gas from any one of the front surface or rear surface of said water retention member to the other surface at the reaction step in the aforesaid method.

The invention according to claim 3 is constituted in a configuration that the aeration water retention member is comprised of material containing at least one of a group of knitted product composed of non-organic fibrous material, woven fabric and non-woven fabric or ceramic material having some fine passed-through holes.

The invention according to claim 4 is an ethylene gas modifying device for carrying out the ethylene gas modifying method according to claim 1 comprising; (a) a water retention member made of material having a water repelling characteristic to form a water retention surface capable of holding water in particle form at the surface;
(b) ultra-violet rays generating means for generating ultra-violet rays with a wavelength of 254 nm arranged in a near distance within 10 mm toward said water retention surface;
(c) a temperature control means for controlling a location near the irradiated ultra-violet rays in a temperature range of 10°C to 40°C; (d) a water holding means for holding water in a particle form on said water retention surface; and (e) aeration means for passing gas containing ethylene gas to make contact with the water droplets held on said water retention surface.

The invention according to claim 5 is an ethylene gas modifying device for carrying out the ethylene gas modifying method according to claim 2 or claim 3 comprising: (a) an aeration water retention member made of material having a water repelling characteristic to form a water retention surface capable of holding water in particle form at the surface, and formed with many fine holes passing through its front surface and rear surface;
(b) ultra-violet rays generating means for generating ultra-violet rays with a wavelength of 254 nm arranged in a near distance within 10 mm toward said water retention surface; (c) a temperature control means for controlling a location near the irradiated ultra-violet rays in a temperature range of 10°C to 40°C; (d) a water holding means for holding water in a particle form on said water retention surface; and (e) aeration means for passing gas containing ethylene gas from one of the front and rear surfaces of said water retention member to the other surface through said fine holes with the water droplets held on said water retention surface.

The invention according to claim 6 is a freshness keeping device for a fresh agricultural product with the ethylene gas modifying device according to claim 4 or claim 5, wherein the ethylene gas modifying device according to claim 4 or claim 5 is installed in a storehouse for use in storing the fresh agricultural product.

Then, this is characterized in that gas in the storehouse is circulated through the aeration means of said ethylene gas modifying device, the ethylene gas generated from the agricultural product stored in said storehouse is contacted and reacted with OH radical generated through irradiation of ultra-violet rays and held on said water retention surface so as to modify it into harmless ethane and water, thereby harmful ethylene gas in the storehouse is reduced and the freshness of the fresh agricultural product can be kept for a long period of time.

The invention according to claim 7 is the freshness keeping device for a fresh agricultural product with the ethylene gas modifying device according to claim 4 or claim 5 and this is constituted such that a guide duct having spaced-apart exhaust ports is arranged along the bottom part near the side wall in a storehouse and a vertical main duct is raised to be communicated with said guide duct at an intermediate location of said guide duct, the upper location of said vertical main duct is provided with an intake port, the intermediate height location of said main duct stores the ethylene gas modifying device according to claim 4 or claim 5.

Then, this is characterized in that gas in said storehouse is passed through said duct and circulated by the aeration means of said ethylene gas modifying device, ethylene gas generated from an agricultural product stored in said storehouse is contacted and reacted with OH radical generated through irradiation of the ultra-violet rays and held on said water retention surface and is modified into harmless ethane and water so as to reduce harmful ethylene gas in the gas of the storehouse and to enable a freshness of the fresh agricultural product to be kept for a long period of time.

The invention according to claim 8 is the freshness keeping device for a fresh agricultural product according to claim 7, wherein the aeration means of the ethylene gas modifying device is a blower arranged at an intake port of the main duct and an ethylene gas filter panel is arranged at the upper intermediate height location in the main duct than the position of said ethylene gas modifying device.

The invention according to claim 9 is the freshness keeping device for a fresh agricultural product according to claim 7 or claim 8 characterized in that a cooling machine is installed within the storehouse, an electrical heater is installed at an upper intermediate height position in the main duct than a position of the ethylene gas modifying device, a humidity in the storehouse is detected by a humidity sensor installed near in the storehouse and an operation of the electrical heater can be controlled so that the humidity in the storehouse can be kept at a set range on the basis of varying detected data.

In general, although OH radical may not be easily produced even if the ultra-violet rays are merely irradiated against water, the present invention enabled a large amount of OH radicals to be generated with the energy of ultra-violet rays enclosed in the water droplets by holding the water repelled against the water retention member with the water repelling surface in a fog-like particle form under a high density, irradiating the ultra-violet rays with a wavelength of 254 NM from the near distance within 10 mm against the group of water droplets
and controlling the location near the irradiation of the ultra-violet rays to a temperature range of 10°C to 40°C.

Then, it becomes possible to modify ethylene gas contacted with OH radical under an action of the OH radical into ethane and water by aerating and contacting gas containing ethylene gas with OH radical generated in the water droplet.

In addition, a combination between the ultra-violet rays emitting tube for generating ultra-violet rays and the water retention member (for example, woven fabric, knitted cloth and non-woven fabric composed of non-organic fibrous material processed with water repelling work or the like) enables its compact size to be attained and they can be stored in a small container and so the ethylene gas modifying device stored in the container can be made small in size and light in weight in total.

Accordingly, the compact ethylene gas modifying device as described above can be easily assembled into a home-use storehouse for various type of fresh agricultural products as well as the large-sized storehouse for fresh agricultural product for professional use using the duct, the freshness keeping device for the fresh agricultural product having the modifying device installed in the storehouse modifies harmful ethylene gas released from the stored fresh agricultural product into ethane and water in a high efficient manner under an action of the OH radical and enables the freshness of the fresh agricultural product to be kept for a long period of time.

Further, in the present invention, the generated OH radical is held on air molecules to enable germs floating in the air to be sterilized under its strong oxidization action. At that time, the prior art ozone sterilization causes the ozone to be left and apply a harmful action, although the present invention shows that the OH radical to be generated is diminished instantly, so that bad influence may not be applied to other items and this is safely treated.

Although the ethylene gas modifying method with the ultra-violet rays of the present invention is the most suitable method for modifying ethylene gas, it has a possibility that it can be utilized also for modifying various kinds of other organic gases.

### BRIEF DESCRIPTION OF DRAWINGS

FIG. 1 is a schematic side elevational view in longitudinal section for showing the substantial part of the device used in the method of the present invention.
FIG. 2 is a perspective view for showing the substantial part of the modifying device with ethylene gas of the present invention.
FIG. 3 is a perspective view for showing the modifying device with ethylene gas of another preferred embodiment.
FIG. 4 is a schematic perspective view for showing a device for keeping freshness of fresh agricultural product.
FIG. 5 is an illustrative view for showing an OH radical generating process of the present invention.
FIG. 6 is a graph for showing a result of comparing experiment to observe a reduction state of ethylene gas.
FIG. 7 is a graph for showing a result of comparing experiment to observe an increasing state of ethylene gas.
FIG. 8 is a graph for showing a result of comparing experiment to observe a reduction state of ethylene gas when the device is operated and when the device is not operated, respectively.
FIG. 9 is a schematic perspective view for showing a device for keeping freshness of fresh agricultural product.
FIG. 10 is a schematic perspective view for showing a device for keeping freshness of fresh agricultural product of another preferred embodiment.
FIG. 11 is a graph for showing a result of comparing experiment of a moot viability state.
FIGS. 12a, 12b and 12c are schematic side elevational views in longitudinal section for showing a shape of water droplet and a concentrated state of ultra-violet rays.

### BEST MODE FOR CARRYING OUT THE INVENTION

The present invention will be described at first in reference to an embodiment in which a method for modifying ethylene gas is performed.

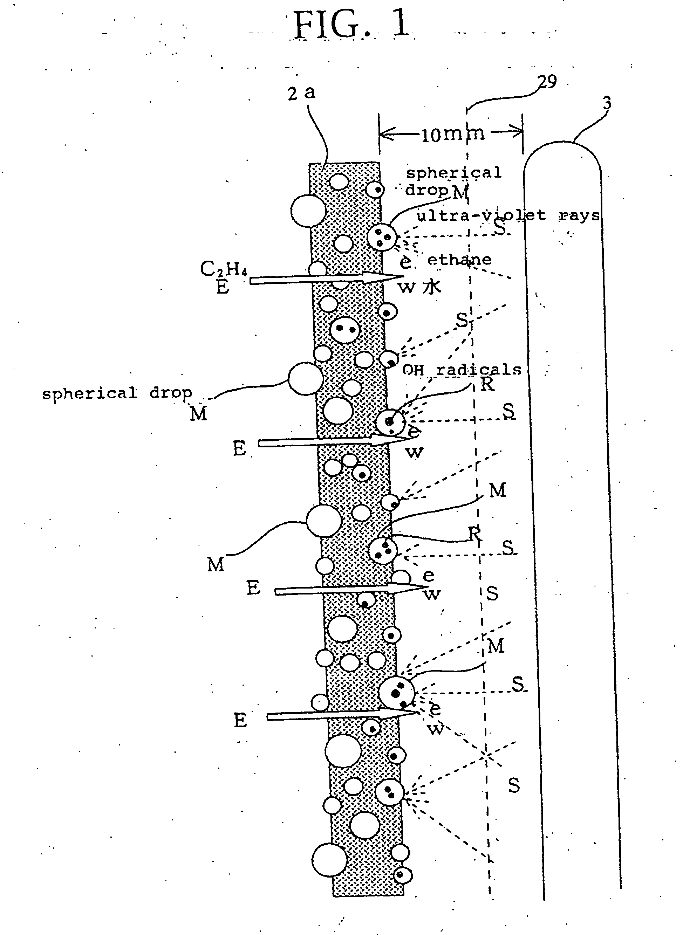

In the method, water droplets M (particles) is held on the surface 2a having water repellent (drainage) characteristic of a water retention member (refer to Fig. 1)

Then, water is always or properly supplied to the surface of the water retention member 2 and the surface is kept at a state where the surface is always wetted with water droplets M (the state in which the water droplets M are not contacted each other, but they are closely present over the entire surface of the water retention surface) (a water retention step).

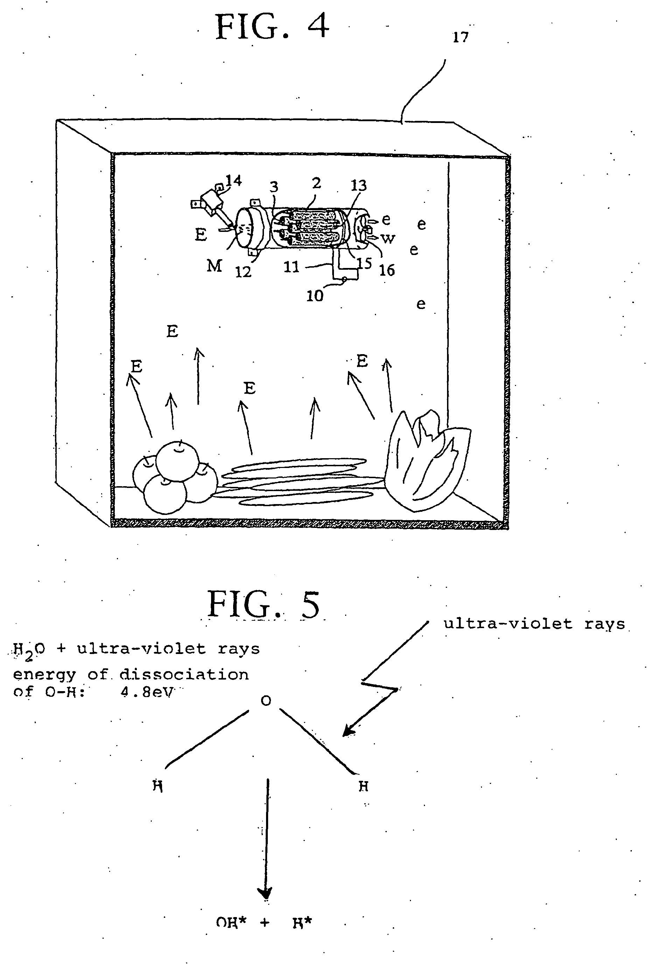

As shown in Fig. 5, ultra-violet rays S with a wavelength of 254 nm are irradiated within a near distance of 10 mm or less the water droplets M and in this case, as shown in Fig. 1, the location near the irradiated ultra-violet rays is controlled with an electric heater 29 and the like to a temperature range of 10°C to 40°C to cause a large number of OH radicals R to be generated in the water droplets M (an irradiation step).

Then, gas containing ethylene gas E is aerated and contacted with the OH radicals R generated in the water droplets M (a reaction step). At this time, the ethylene gas E in the gas is modified into ethane (e) and water (w) under an action of the OH radicals.

There will be described a principle as follows in which the OH radicals are generated through irradiation of the ultra-violet rays to cause ethylene to be modified.

At first, when ultra-violet rays are irradiated the water droplets M, the ultra-violet rays separate water molecule into OH radicals and H radicals as shown in Fig. 5.

At this time, dissociation energy of [O] and [OH] is 4.8 eV and a wavelength of the ultra-violet rays having this dissociation energy is λ =259 nm.

Then, OH radicals separated and generated from water (H₂O) is contacted with ethylene gas (C₂H₄) and connected with it.

Ethane (C₂H₃) and water (H₂O) are generated through a reaction between the OH radicals and ethylene gas C₂H₄.

The reaction is expressed by a following chemical formula 1.

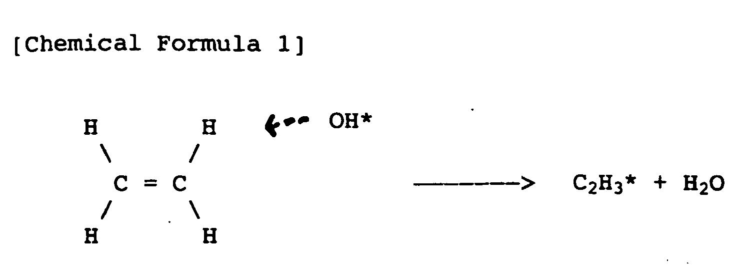

Although ethylene is modified as described above, a life of OH radicals generated at that time is quite instantaneous of 1/10⁶ second. However, since the ultra-violet rays are continued to be irradiated in the present invention, a large number of OH radicals are continued to be generated, and OH radicals become always present in the water droplets.

Then, the location near the irradiated ultra-violet rays is controlled by a temperature control means to a temperature range of 10°C to 40°C to enable UV intensity (µm/cm²) to be effectively attained.

Upon measurement of UV intensity (µm/cm²) of the ultra-violet rays, it becomes like one indicated in Table 1 as follows for showing a temperature characteristic. Experimental result at a temperature indicated in Table 1 shows that a holding of freshness of the fresh agricultural product has a characteristic in which the highest state can be attained under an appropriate state of 40°C to 50°C. Practically, this is not suitable for the present invention because an intensity of UV rapidly decreases from 1250µm/cm² at a temperature lower than about 10°C and OH radicals are hardly generated, and if it is more than about 40°C, a temperature within a storehouse is increased and it does not become suitable for holding a freshness of the fresh agricultural product because a powerful cooling for returning the increased temperature to a low temperature is required.

**Table 1**

| Temperature near irradiation of ultra-violet ray (°C) | Intensity of UV (µw/cm²) | State of fresh agricultural product in a storing case |
|---|---|---|
| 0 | 600 | OH radicals were insufficiently generated and a concentration of ethylene gas was increased. |
| 10 | 1250 | OH radicals were generated, ethylene gas was decreased, a storehouse temperature was kept at a low value and a freshness of vegetables or the like was kept well. |
| 30 | 1900 | A large number of OH radicals were generated, ethylene gas was reduced, a storehouse temperature was kept slightly at a low value and a freshness of vegetables or the like was kept well. |
| 40 | 1950 | A large number of OH radicals were generated, ethylene gas was reduced, a storehouse temperature was kept at about normal temperature and a freshness of vegetables or the like was kept well. |
| 50 | 1900 | Although a large number of OH radicals were generated, a storehouse temperature could not be kept low and a freshness of vegetables or the like was decreased. |
| 60 | 1700 | Although a large number of OH radicals were generated, a storehouse temperature was increased and a freshness of vegetables or the like was remarkably decreased. |

Next, there will be described a water retention member formed with a water retention surface capable of holding water in particle form.

The surface of the water retention member 2 requires a water repellent (drainage) characteristic for changing water into water droplets and as a material capable of attaining a water repellent performance, glass wool or the like can be applied.

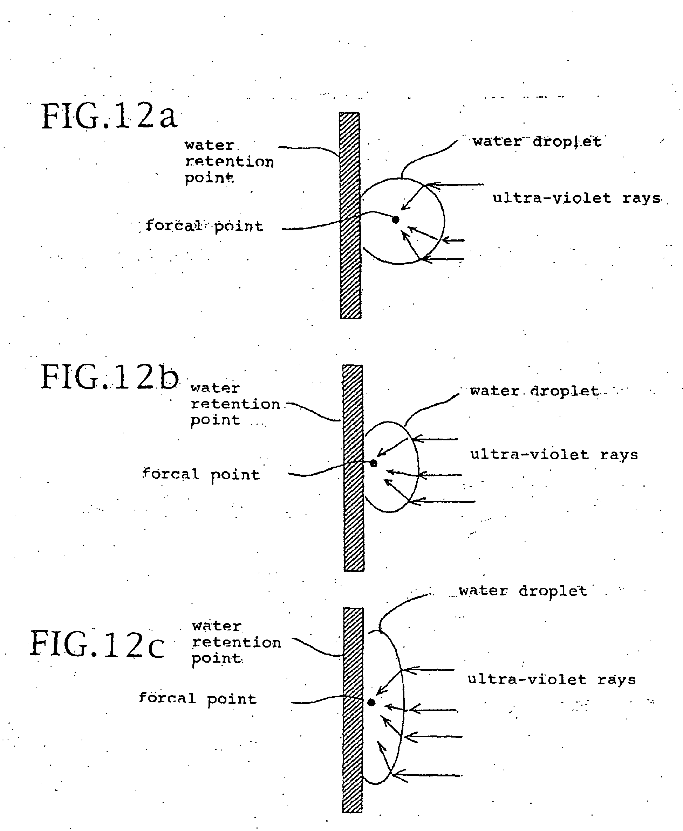

As shown in Figs. 12a, 12b and 12c, fog-like water droplets held on the water repellent surface of the water retention member become spherical or semi-spherical shape by a surface tension through the aforesaid water retention stage and they are kept as they without collapsing their shape.

In the present invention, although water is properly supplied to the water retention surface at the water retention stage in such a way that water is closely held on it in particle forms, it is not preferable that if supplying of water is erroneously carried out to cause an excessive amount of water to be supplied, the water droplets held on the water retention surface are coupled each other to become large-sized particles and further the water becomes a plane-like shape and the particle shape is decayed.

To the contrary, it is not preferable that an amount of supplied water is too less, the surface becomes a dried condition and a large amount of OH radical cannot be attained.

In this way, as a method for holding the water retention surface wetted with water droplets, i.e. the state in which the water droplets M are not contacted each other and they are closely present at the entire water retention surface, it becomes possible to employ a method in which fog-like droplets are optionally made through an atomizer and held on the water retention surface or a method in which condensation water is generated at the water retention surface to enable water droplets to be attained.

In addition, holding water on the water retention surface under its particle state (a state in which the water becomes a spherical shape or a semi-spherical shape due to its surface tension) is a superior method in view of the fact that an aeration characteristic can be attained between the water droplets, i.e. an effect that the contact area between OH radicals and ethylene gas is increased to promote their reaction.

In particular, when there is provided an aeration water retention member capable of applying aeration at its front and rear surfaces, it is necessary to form a clearance between the water particles held on the water retention surface so as to assure an aeration characteristic at its front and rear surfaces.

Additionally, when the water droplets have a spherical shape, their surface area is large, so that it becomes possible to receive irradiated ultra-violet rays from all directions, increase a irradiation efficiency of the ultra-violet rays against water and generate much amount of OH radical.

That is, water is held on the water retention surface to become a water droplet of substantial spherical curved member like a lens due to its surface tension (e.g. Fig. 12a shows a semi-spherical shape, Fig. 12b shows a semi-spherical shape approximate to a sphere and Fig. 12c shows a spherical curved surface), and when the ultra-violet rays are incident to the water droplets, the ultra-violet rays are refracted at the spherical curved surface, bent toward the focal point and advance toward a central part. That is, energy of irradiated ultra-violet rays is concentrated at a focal point of the lens. OH radical is effectively generated within the water droplets through concentration of the energy of the ultraviolet rays.

In addition, a reason why the ultra-violet rays with a wavelength of 254 nm are irradiated in the present invention consists in the fact that a large member of OH radicals are generated through the action of the ultra-violet rays with that wavelength.

Further, a reason why the rays are irradiated against water droplets within a near distance of 10 mm or less consists in the fact that the ultra-violet rays are rapidly weakened even if the distance is short under a presence of water vapor in the air and if the distance becomes 10 mm or more, the ultra-violet rays are excessively attenuated and OH radical cannot be generated at the water droplets.

Then, although it is better that the distance becomes to a value of 10 mm or less as short as possible, its practical distance is one where the water droplets can be held on the water retention surface and aeration can be attained, so that there may be found a certain limitation. Then, the limitation in approaching distance is made different in reference to material to be used.

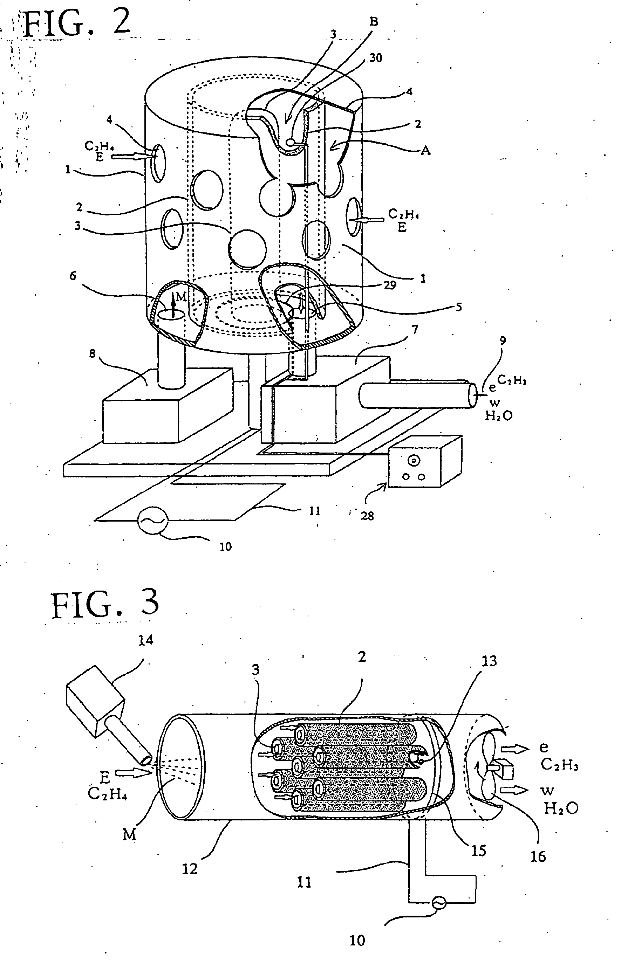

In addition, although it is possible to employ various kinds of shape of water retention member, there is provided an embodiment in which water droplets are held on the aeration water retention member 2 having many fine holes passing through front and rear surfaces (refer to the schematic figure of Fig. 2).

In this embodiment, gas such as air containing ethylene gas is aerated from the front surface to the rear surface of the water retention member 2 holding water droplets through fine holes to enable ethylene gas to be contacted with water, so that this is a preferable method for contacting OH radical with ethylene gas.

Next, there will be described a device for modifying ethylene gas for carrying out the aforesaid method.

As shown in Fig. 2, one example of the device is constructed such that a cylindrical aeration water retention member 2 enclosed by glass wool is stored in a cylindrical container 1, an outer space A outside the aeration water retention member 2 and an inner space B inside the aeration water retention member 2 are formed within the container 1.

Then, an ultra-violet rays light emitting tube 3 is mounted within the aeration water retention member 2 with an approaching distance of 5 mm in respect to the inner surface of the water retention member 2.

As the ultra-violet rays emitting tube 3, one for generating ultra-violet rays with a wavelength of 254 nm is used.

Further, there is provided a temperature control means for controlling a temperature near the irradiated ultra-violet rays to an appropriate temperature.

As the temperature control means, although it is also possible to keep a location near the irradiated ultra-violet rays in a temperature range of about 10°C to 40°C by controlling in advance a temperature of the entrapped aeration gas or by increasing a self heat of the ultra-violet rays emitting tube 3, more positively, for example, it is possible to arrange a temperature sensor 30 connected to a control part 28 between the irradiation part of the ultra-violet rays and the aeration water retention member 2, controlling an electrical heating heater 29 connected to the control part 28 so as to cause its value to become a temperature range set in response to a numerical value detected by the sensor 30 and keep the location near the irradiated ultra-violet rays to a temperature range of about 10°C to 40°C under a temperature control of the control part 28 connected to a heating power supply.

Then, aeration holes 4 are arranged at a surrounding side surface of the cylindrical container 1 to enable a sufficient amount of air to be taken from outside into the outer space A, and an aeration hole 5 is arranged at the bottom part of the cylindrical container 1 facing the inner space B to cause air entered at the inner space B to be discharged.

Further, a discharging pump 7 is installed at an exhausting pipe 9 connected to the aeration hole 5 in the aforesaid inner space B to enable gas containing ethylene gas to be forcedly contacted with and passed through the fine holes of the water retention member 2.

Then, when the atomized droplets are entered by a humidifier 8 from the aeration hole 6 into the outer space A between the aforesaid cylindrical container 1 and the aeration water retention member 2, some fine water droplets (atomized droplets) are held on the surface of the aforesaid aeration water retention member 2, the atomized droplets are held on the water repelling surface of the aforesaid water retention member 2, and the surface part to which at least ultra-violet rays are irradiated as shown in Figs. 12a, 12b and 12c is held in a spherical surface shape with the surface tension.

The aforesaid ultra-violet rays emitting tube 3 is connected to a power supply 10 through a cord 11 and a voltage of about 4.5V can be applied to the power supply 10.

In the case of the cylindrical water retention member 2, it is possible to install this member at a near equal distance within 10 mm in respect to the inner surface of the tubular water retention member 2 from the ultra-violet rays generating tube 3 arranged at the central part of it.

As the humidifier 8 applied, a heating type atomizer or a ultrasonic type humidifier can be used. When it is used at a refrigerator, it is preferable to use the ultrasonic type humidifier in order to avoid any increasing in temperature of the refrigerator.

Then, the water droplets M generated from the humidifier 8 are held on the inner surface of the water retention member 2, OH radical is generated in the water droplets with the ultraviolet rays irradiated against the inner surface, gas containing ethylene gas is forcedly aerated and contacted with the OH radical with the exhausting pump 7 to promote the reaction and then ethylene gas contained in the gas is modified into ethane and water.

It is preferable that the aeration water retention member 2a used in this device is made of material such as fibrous material of knitted product, woven fabrics or non-woven fabrics composed of non-organic fibrous material, or ceramics material formed with some through-pass fine holes because they are durable against weathering with the ultra-violet rays.

Although the form of the aforesaid ethylene gas modifying device is of a single unit type, when the device is used in a large-sized storehouse of professional type, it can be adapted for it by assembling a plurality of device units for improving its capability.

There will be described as follows an embodiment in which a plurality of device units are used.

As shown in Fig. 3, the device of this preferred embodiment is constructed such that a base plate 15 is installed within a cylindrical container 12 and the cylindrical water retention member 2 is vertically installed on the base plate 15.

The ultra-violet rays emitting tube 3 for generating ultra-violet rays with a wavelength of 254 nm is installed at the central part of the water retention member 2 in a near distance of 5 mm.

Then, in order to keep a location near the irradiation of ultra-violet rays in a temperature range of about 10°C to 40°C, the temperature control is carried out by increasing an output of a plurality of ultra-violet rays emitting tubes 3 to increase its self-heat.

The aforesaid ultra-violet rays emitting tubes 3 are connected to the power supply 10 through the cord 11. The power supply 10 can attain a requisite dose of ultra-violet rays with a voltage of about 5V per one of the ultra-violet rays emitting tubes 3.

An aeration hole 13 is formed in the tube of the water retention member 2 of the base plate 15 in such a way that air can be passed from one side to the other side of the cylindrical container 12 through a sucking action of a blower 16 (an aeration means) arranged at a rear part of the base plate 15.

In addition, there is provided an atomizer 14 for use in holding water droplets M on the aforesaid water retention member 2.

As the device provided with the aforesaid ethylene gas modifying device for keeping a freshness of the fresh agricultural product, various kinds of forms can be attained and so there will be described as follows about these devices.

As shown in Fig. 4, one of these devices is constructed such that the aforesaid plurality of ethylene gas modifying devices are installed at the inner wall surface of a storehouse 17.

Then, ethylene gas E released from the fresh agricultural product stored in the storehouse 17 circulates in it together with air and during this flow, ethylene gas contained in the air contacted with a large number of OH radicals generated with the ultra-violet rays of the ethylene gas modifying device is modified into ethane (e) and water (w).

The modified harmless gas circulates in a clearance space in the fresh agricultural product in the storehouse 17 under an operation of the blower 16 installed in the aforesaid ethylene gas modifying device and so the ethylene gas is not increased around the fresh agricultural product.

Then, there will be described a device of another preferred embodiment different from the former one as follows.

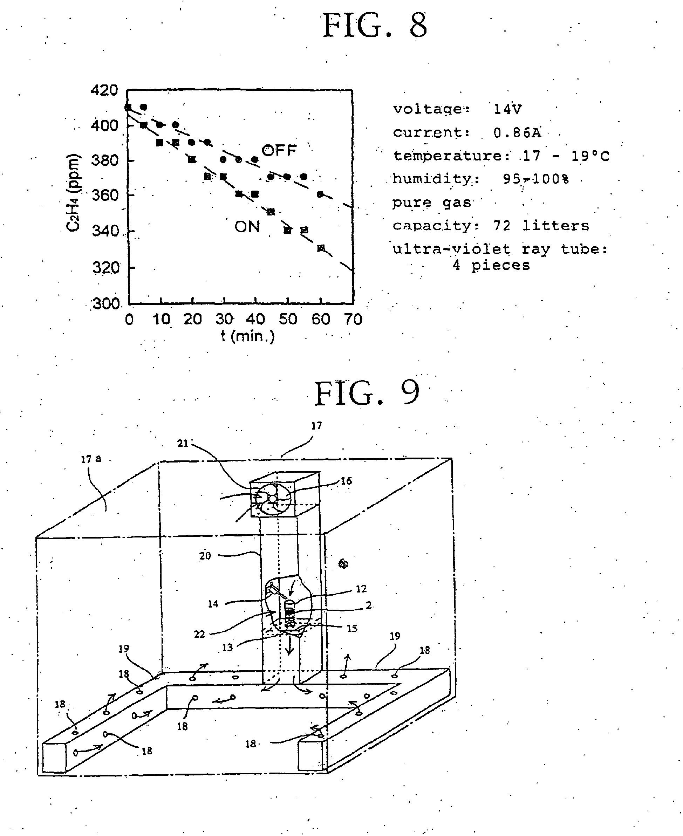

As shown in Fig. 9, this device is constructed such that a guide duct 19 having some spaced-apart exhaust ports 18 is arranged in the storehouse 17 along the bottom parts near the side walls 17a of the storehouse 17, a vertical main duct 20 is raised at an intermediate location of the guide duct 19 so as to be communicated with it, an intake port 21 is arranged at the upper location of the vertical main duct 20 and at the same time the aforesaid ethylene gas modifying device 22 is stored at an intermediate height location of the main duct 20.

In this device, the air having ethylene gas removed is uniformly circulated within the storehouse through the guide duct 19 even at the corner portions where poor circulation of air occurs.

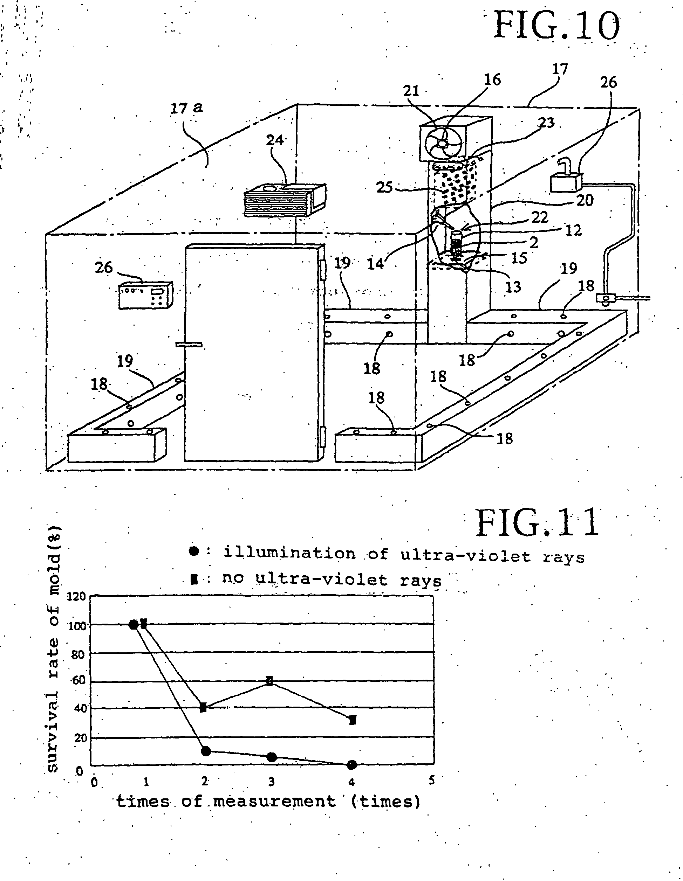

A device of still further embodiment is constructed such that as shown in Fig. 10, an aeration means for the ethylene gas modifying device 22 is applied as the blower 16 arranged at the intake port 21 in the main duct 20 in regard to the device of the aforesaid embodiment (shown in Fig. 9), and then an ethylene gas filter panel 23 is installed at the upper part in the upper main duct 20 than the position of the aforesaid ethylene gas modifying device 22.

As the aforesaid ethylene gas filter panel 23, a panel containing gas adsorption type material is used, and for example, an item mixed with some particles of high adsorbing characteristic with active carbons being mainly applied in the aeration fibrous material can be used.

It is preferable that a fixing location of the aforesaid ethylene gas filter panel 23 is set at an upstream side than the ethylene gas modifying device and it has an advantage of long life because clogging caused by atomized moisture can be avoided.

Then, a gas concentration within the storehouse can be reduced because ethylene gas at the ethylene gas filter panel 23 is adsorbed.

A device of yet still further embodiment in regard to the aforesaid device is constructed such that, as shown in Fig. 10 (the electrical wiring and circuits are eliminated in this figure), a cooling machine 24 is installed within the storehouse 17 and an electrical heater 25 is installed at an upper intermediate height location in the main duct 20 than a position of the ethylene gas modifying device 22. Then, a humidity in the storehouse 17 is detected by a humidity sensor 26 installed near within the storehouse 17, the electrical heater 25 is controlled and operated in such a way that the humidity becomes within a set range on the basis of the varying detected data so as to enable the humidity in the storehouse 17 to be kept within the most suitable range.

In this device, the fresh agricultural product can be prevented from being reduced in its freshness due to occurrence of dew condensation in the storehouse and concurrently decay in the agricultural product can be prevented from being generated.

Further, it is possible to prevent water droplets from being adhered to either the wall surface or the floor surface of the storehouse and further prevent the inner side of the storehouse from being stained with mold.

It is preferable that a humidity set range in the storehouse for keeping a freshness of the product is set by a humidifier 27 in a range of about 80% to 90%, and it is set such that if the numerical value detected by the humidity sensor 26 becomes 95% or more, the electrical heater 25 is operated and if the numerical value becomes 80% or less, operation of the electrical heater 25 is stopped, thereby it is possible to keep the inner side of the storehouse at a specified humidity and a humidity of 100% is not attained and dew condensation does not occur in the storehouse.

Further, in this case, it is set such that the temperature is kept at a constant low value of about 2°C by the cooling machine 24 because the temperature becomes high under a control of only the electrical heater 25, thereby a freshness of the fresh agricultural product is maintained.

Further, this embodiment has an advantage that it can be utilized for keeping a location near irradiated ultra-violet rays in a temperature range of about 10°C to 40°C because the air heated through operation of the electrical heater 25 is absorbed into the ethylene gas modifying device 22 installed below the electrical heater 25.

### [Example of Experiment 1]

Experiment has been carried out in such a way that reduced states of ethylene gas are compared to each other when the ultra-violet rays are not irradiated, when the ultra-violet rays are irradiated under no presence of water retention member and when the ultra-violet rays are irradiated the water retention member, respectively, and an effect of presence of the water retention member is confirmed.

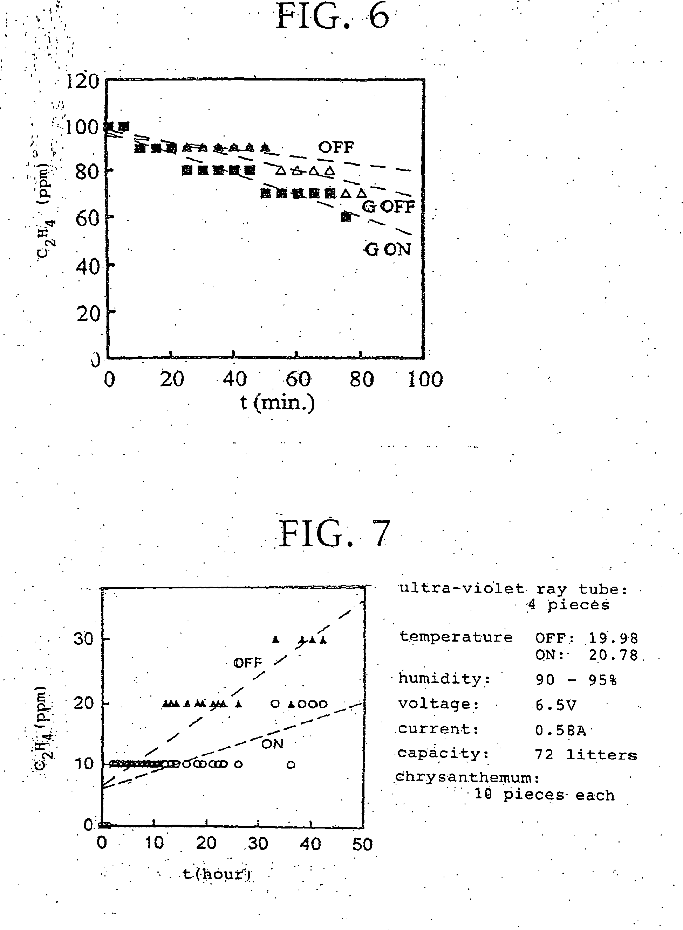

A result of this experiment is indicated in Fig. 6.

A black circle in this graph indicates a value when the ultra-violet rays are not irradiated (OFF).

A white triangle in this graph indicates a value when the ultra-violet rays are irradiated and the water retention member (non-organic fibrous material) is not present (G OFF).

A black square in this graph indicates a value when the ultra-violet rays are irradiated and the water retention member (non-organic fibrous material) is installed (G ON).

Some conditions of this experiment are as follows.

| | |
|---|---|
| Volume of container: | 72 liters |
| Ultra-violet rays tube: | One piece |
| Temperature: | 20°C to 21°C |
| Humidity: | 90 to 96% |
| Voltage: | 4.5 V |
| Current: | 0.2 A |
| Electrical power: | 0.9 W |

In reference to the result of this experiment, it shows that when ethylene (C₂H₄) at the time of starting experiment is 100 ppm and this value is compared after elapsing of 100 minutes, a concentration of ethylene is 40 ppm when the ultra-violet rays are not irradiated (OFF) and is reduced by 20 ppm and to the contrary when the ultra-violet rays are irradiated the water retention member (non-organic fibrous material, the value is 40 ppm and is reduced by 60 ppm.

As described above, it has been confirmed that irradiation of the ultra-violet rays the water retention member is effective.

### [Example of Experiment 2]

A cut chrysanthemum was put into a container and there was carried out an experiment for measuring the comparison of increased concentrations of ethylene when the device of the present invention was operated and when the device of the present invention was stopped.

In Fig. 7 is indicated the result of this experiment.

"ON" in this graph indicates an operated state and "OFF" in this graph indicates a stopped state, respectively.

Some conditions of this experiment are as follows.

| | |
|---|---|
| Volume of container: | 72 liters |
| Ultra-violet rays tube: | 4 pieces |
| Temperatur: | OFF 19.98°C ON 20.28°C |
| Humidit: | 90 to 95% |
| Voltage: | 6.5 V |
| Current: | 0.58 A |
| Chrysanthemum: | Each ten piece |

As indicated in Fig. 7 concluding the results, this experiment shows that ethylene gas (C₂H₄) is 15 ppm under "ON" for 40 hours, and 30 ppm under "OFF" and an increased amount of ethylene is restricted.

Then, although after 45 hours, both flowers and stems were vigorous under "ON", a petal of chrysanthemum was substantially withered and leaves were withered and a remarkable difference was found between them.

As described above, it was confirmed in the device of the present invention that increasing of ethylene was restricted and this was effective for keeping a freshness of the fresh agricultural product.

### [Example of Experiment 3]

There was carried out an experiment in which a comparison of ethylene concentrations in time change when the ultra-violet rays were irradiated pure gas of ethylene (C₂H₄) was measured.

In Fig. 8 is indicated the result of this experiment.

"ON" in this graph indicates an operated state and "OFF" in this graph indicates a stopped state, respectively.

Some conditions of this experiment are as follows.

| | |
|---|---|
| Volume of container: | 72 liters |
| Ultra-violet rays tube: | 4 pieces |
| Temperature: | 17°C to 19°C |
| Humidity: | 95 to 100% |
| Voltage: | 14 V |
| Current: | 0.86 A |

In the case of this experiment, as indicated in Fig. 8 concluding the results, it was confirmed that the concentration of ethylene was 410 ppm at the time of starting experiment and this was decreased down to 320 ppm under "ON" after 50 minutes. However, under "OFF" state, the value was 370 ppm and its reduction was low.

This fact shows that ethylene is reduced through irradiation of the ultra-violet rays.

### [Example of Experiment 4]

There was carried out an experiment that the ethylene gas modifying device was put in a box, the ultra-violet rays of the device were irradiated to check how an occurrence of mold was influenced by it.

In this experiment, spores of mold were put in a 50 cm x 50 cm square box, a laboratory dish was placed there, air was circulated in the box and an occurrence elapsing state of mold was checked.

In the graph of Fig. 11 is shown the result of experiment.

As shown in this graph, although a rate of occurrence of mold was decreased when the ultra-violet rays were not irradiated and in turn a rate of occurrence of mold at the fourth time became "0" when the ultra-violet rays were irradiated.

It can be considered from this experiment that a direct sterilization effect of the irradiation of ultra-violet rays cannot be denied for its presence, but it can be considered that a rate of occurrence of mold was reduced by a more powerful oxidization force of the generated OH radicals than the ultra-violet rays.

Although mold was used in this experiment, it can be expected that a sterilization force caused by a powerful oxidization force of OH radical is generated for microorganism such as putrefactive bacteria other than mold, putrefaction of the fresh agricultural product is prevented through the effect of sterilization and a substantial effect of keeping freshness is attained.

## Claims

1. An ethylene gas modifying method with ultra-violet rays comprising the steps of:
retaining water by supplying water to a water retention member formed with a water retention surface capable of holding water in particle form at its surface and holding said water retention surface in a state wetted by water droplets;
irradiating the ultra-violet rays with a wavelength of 254 nm toward said water droplets held on said water retention surface from a near distance within 10 mm while controlling its nearby temperature in a temperature range of 10°C to 40°C so as to generate OH radical in said water droplets with an energy of said irradiated ultra-violet rays; and
reacting step for aerating gas containing ethylene gas to said water retention surface holding said water droplets containing said OH radical to contact said ethylene gas with said OH radical **characterized in that** said ethylene gas is contacted and reacted with said OH radical through each of said steps to enable it to be modified into ethane and water.

2. The ethylene gas modifying method with ultra-violet rays according to claim 1 **characterized in that** the water retention member is an aeration water retention member having many fine holes passed through its front and rear surfaces, OH-radical and ethylene gas can be contacted each other by passing gas containing ethylene gas from any one of the front surface or rear surface of said water retention member to the other surface at the reaction step.

3. The ethylene gas modifying method according to claim 2 **characterized in that** the aeration water retention member is comprised of material containing at least one of a group of knitted product composed of non-organic fibrous material, woven fabric and non-woven fabric or ceramic material having some fine passed-through holes.

4. An ethylene gas modifying device for carrying out the ethylene gas modifying method according to claim 1 comprising:
(a) a water retention member made of material having a water repelling characteristic to form a water retention surface capable of holding water in particle form at the surface;
(b) ultra-violet rays generating means for generating ultra-violet rays with a wavelength of 254 nm arranged in a near distance within 10 mm toward said water retention surface;
(c) a temperature control means for controlling a location near the irradiated ultra-violet rays in a temperature range of 10°C to 40°C;
(d) a water holding means for holding water in a particle form on said water retention surface; and
(e) aeration means for passing gas containing ethylene gas to make contact with the water droplets held on said water retention surface.

5. An ethylene gas modifying device for carrying out the ethylene gas modifying method according to claim 2 or claim 3 comprising:
(a) an aeration water retention member made of material having a water repelling characteristic to form a water retention surface capable of holding water in particle form at the surface, and formed with many fine holes passing through its front surface and rear surface;
(b) ultra-violet rays generating means for generating ultra-violet rays with a wavelength of 254 nm arranged in a near distance within 10 mm toward said water retention surface;
(c) a temperature control means for controlling a location near the irradiated ultra-violet rays in a temperature range of 10°C to 40°C;
(d) a water holding means for holding water in a particle form on said water retention surface; and
(e) aeration means for passing gas containing ethylene gas from one of the front and rear surfaces of said water retention member to the other surface through said fine holes so as to make contact with the water droplets held on said water retention surface.

6. A freshness keeping device for a fresh agricultural product with the ethylene gas modifying device according to claim 4 or claim 5 **characterized in that**;
the ethylene gas modifying device according to claim 4 or claim 5 is installed in a storehouse for use in storing the fresh agricultural product;
gas in the storehouse is circulated through the aeration means of said ethylene gas modifying device, the ethylene gas generated from the agricultural product stored in said storehouse is contacted and reacted with OH radical generated through irradiation of ultra-violet rays and held on said water retention surface so as to modify it into harmless ethane and water, thereby harmful ethylene gas in the storehouse is reduced and the freshness of the fresh agricultural product can be kept for a long period of time.

7. The freshness keeping device for a fresh agricultural product with the ethylene gas modifying device according to claim 4 or claim 5 **characterized in that**;
a guide duct having spaced-apart exhaust ports is arranged along the bottom part near the side wall in a storehouse and a vertical main duct is raised to be communicated with said guide duct at an intermediate location of said guide duct, the upper location of said vertical main duct is provided with intake port, the intermediate height location of said main duct stores the ethylene gas modifying device according to claim 4 or claim 5; and gas in said storehouse is passed through said duct and circulated by the aeration means of said ethylene gas modifying device, ethylene gas generated from an agricultural product stored in said storehouse is contacted and reacted with OH radical generated through irradiation of the ultra-violet rays and held on said water retention surface and is modified into harmless ethane and water so as to reduce harmful ethylene gas in the gas of the storehouse and to enable a freshness of the fresh agricultural product to be kept for a long period of time.

8. The freshness keeping device for a fresh agricultural product according to claim 7, wherein the aeration means of the ethylene gas modifying device is a blower arranged at intake port of the main duct and an ethylene gas filter panel is arranged at the upper intermediate height location in the main duct than the position of said ethylene gas modifying device.

9. The freshness keeping device for a fresh agricultural product according to claim 7 or claim 8, wherein a cooling machine is installed within the storehouse, an electrical heater is installed at an upper intermediate height position in the main duct than a position of the ethylene gas modifying device, a humidity in the storehouse is detected by a humidity sensor installed near in the storehouse and an operation of the electrical heater can be controlled so that the humidity in the storehouse can be kept at a set range on the basis of varying detected data.

## Patentansprüche

1. Verfahren zur Modifizierung von Ethylengas mit UV-Strahlen, das folgende Schritte umfasst:
Zurückbehalten von Wasser durch Zuführen von Wasser zu einem Wasserrückhalteelement, das mit einer Wasserrückhaltefläche gebildet ist, die geeignet ist, Wasser in Partikelform an ihrer Oberfläche festzuhalten und seine Wasserrückhaltefläche in einem von Wassertropfen benetzten Zustand zu halten;
Abstrahlen der UV-Strahlen mit einer Wellenlänge von 254 nm auf die auf der Wasserrückhaltefläche festgehaltenen Wassertropfen aus einer nahen Distanz innerhalb von 10 mm bei gleichzeitiger Kontrolle der Umgebungstemperatur in einem Temperaturbereich von 10°C bis 40°C, um mit einer Energie der abgestrahlten UV-Strahlen in den Wassertropfen OH-Radikale zu generieren; und
Reaktionsschritt zum Einblasen von Gas, das Ethylengas enthält, auf die Wasserrückhaltefläche, die die das OH-Radikal enthaltenden Wassertropfen festhält, um das Ethylengas mit dem OH-Radikal in Kontakt zu bringen, **dadurch gekennzeichnet, dass** das Ethylengas mit dem OH-Radikal durch jeden dieser Schritte in Kontakt und zur Reaktion gebracht wird, damit es zu Ethan und Wasser modifiziert werden kann.

2. Verfahren zur Modifizierung von Ethylengas mit UV-Strahlen gemäß Anspruch 1, **dadurch gekennzeichnet, dass** das Wasserrückhalteelement ein Einblas-Wasserrückhalteelement mit zahlreichen feinen Löchern durch seine Vorder- und Rückseiten ist, wobei OH-Radikale und Ethylengas miteinander kontaktiert werden können, indem Gas, das Ethylengas enthält, im Reaktionsschritt von der vorderen oder der hinteren Oberfläche des Wasserrückhalteelements auf die andere Oberfläche geleitet wird.

3. Verfahren zur Modifizierung von Ethylengas gemäß Anspruch 2, **dadurch gekennzeichnet, dass** das Einblas-Wasserrückhalteelement ein Material umfasst, das mindestens eines aus einer Gruppe gewirkter Produkte enthält, zusammengesetzt aus nicht-organischem Fasermaterial, Webstoff und Vliesstoff oder Keramikmaterial mit feinen, durchgehenden Löchern.

4. Vorrichtung zur Modifizierung von Ethylengas zur Durchführung des Verfahrens zur Modifizierung von Ethylengas gemäß Anspruch 1, die Folgendes umfasst:
(a) ein Wasserrückhalteelement aus Material, das wasserabstoßende Eigenschaften aufweist, um eine Wasserrückhaltefläche zu bilden, die geeignet ist, Wasser in Partikelform an der Oberfläche festzuhalten;
(b) ein UV-Strahlengenerierungsmittel zum Generieren von UV-Strahlen mit einer Wellenlänge von 254 nm, das in einer nahen Distanz innerhalb von 10 mm von der Wasserrückhaltefläche angeordnet ist;
(c) Temperaturreglermittel zur Kontrolle eines Orts in der Nähe der abgestrahlten UV-Strahlen in einem Temperaturbereich von 10°C bis 40°C;
(d) Wasserfesthaltemittel zum Festhalten von Wasser in einer Partikelform auf der Wasserrückhaltefläche; und
(e) ein Einblasmittel zum Durchführen von Gas, das Ethylengas enthält, um Kontakt mit den Wassertropfen aufzunehmen, die an der Wasserrückhaltefläche festgehalten werden.

5. Vorrichtung zur Modifizierung von Ethylengas zur Durchführung des Verfahrens zur Modifizierung von Ethylengas gemäß Anspruch 2 oder Anspruch 3, die Folgendes umfasst:
(a) ein Wasserrückhalteelement aus Material, das wasserabstoßende Eigenschaften aufweist, um eine Wasserrückhaltefläche zu bilden, die geeignet ist, Wasser in Partikelform an der Oberfläche festzuhalten, und das mit zahlreichen feinen Löchern gebildet ist, die durch seine Vorder- und Rückseite geführt sind;
(b) ein UV-Strahlengenerierungsmittel zum Generieren von UV-Strahlen mit einer Wellenlänge von 254 nm, das in einer nahen Distanz innerhalb von 10 mm von der Wasserrückhaltefläche angeordnet ist;
(c) ein Temperaturreglermittel zur Kontrolle eines Orts in der Nähe der abgestrahlten UV-Strahlen in einem Temperaturbereich von 10°C bis 40°C;
(d) ein Wasserfesthaltemittel zum Festhalten von Wasser in einer Partikelform auf der Wasserrückhaltefläche; und
(e) ein Einblasmittel zum Durchführen von Gas, das Ethylengas enthält, von der Vorder-und Rückseite des Wasserrückhalteelements durch die feinen Löcher zur anderen Oberfläche, um Kontakt mit den Wassertropfen aufzunehmen, die an der Wasserrückhaltefläche festgehalten werden.

6. Frischhaltevorrichtung für ein frisches landwirtschaftliches Produkt mit der Vorrichtung zur Modifizierung von Ethylengas gemäß Anspruch 4 oder Anspruch 5, **dadurch gekennzeichnet, dass**:
die Vorrichtung zur Modifizierung von Ethylengas gemäß Anspruch 4 oder Anspruch 5 in einem Lagerhaus installiert ist, das zur Lagerung des frischen landwirtschaftlichen Produkts verwendet wird;
das Gas in dem Lagerhaus durch das Einblasmittel der Vorrichtung zur Modifizierung von Ethylengas zirkuliert wird; das Ethylengas, das aus dem in dem Lagerhaus gelagerten landwirtschaftlichen Produkt generiert wird, mit dem durch Abstrahlen der UV-Strahlen generierten OH-Radikal in Kontakt und zur Reaktion gebracht wird und an der Wasserrückhaltefläche festgehalten wird, um es zu harmlosem Ethan und Wasser zu modifizieren, wodurch schädliches Ethylengas im Lagerhaus reduziert wird und die Frische des frischen landwirtschaftlichen Produkts über eine lange Zeitdauer erhalten werden kann.

7. Frischhaltevorrichtung für ein frisches landwirtschaftliches Produkt mit der Vorrichtung zur Modifizierung von Ethylengas gemäß Anspruch 4 oder Anspruch 5, **dadurch gekennzeichnet, dass**:
ein Leitkanal mit voneinander beanstandeten Ablassöffnungen am unteren Teil nahe der Seitenwand in einem Lagerhaus angeordnet ist und ein vertikaler Hauptkanal aufgestellt ist, um mit dem Leitkanal an einer mittleren Stelle des Leitkanals zu kommunizieren, wobei die obere Stelle des vertikalen Hauptkanals mit einer Einlassöffnung versehen ist und an der auf mittlerer Höhe angeordneten Stelle des Hauptkanals die Vorrichtung zur Modifizierung von Ethylengas gemäß Anspruch 4 oder Anspruch 5 untergebracht ist; und das Gas in dem Lagerhaus durch den Kanal geführt wird und vom Einblasmittel der Vorrichtung zur Modifizierung von Ethylengas zirkuliert wird; Ethylengas, das von einem im Lagerhaus gelagerten landwirtschaftlichen Produkt generiert wird, mit durch Abstrahlen der UV-Strahlen generierten OH-Radikalen kontaktiert und zur Reaktion gebracht wird und an der Wasserrückhaltefläche festgehalten und zu harmlosem Ethan und Wasser modifiziert wird, um schädliches Ethylengas im Gas des Lagerhauses zu reduzieren und eine Frische des über längere Zeit zu lagernden, frischen landwirtschaftlichen Produkts ermöglicht wird.

8. Frischhaltevorrichtung für ein frisches landwirtschaftliches Produkt gemäß Anspruch 7, wobei das Einblasmittel der Vorrichtung zur Modifizierung von Ethylengas ein Gebläse ist, das an der Einlassöffnung des Hauptkanals angeordnet ist, und eine Ethylengas-Filtertafel an einer höheren mittelhohen Stelle im Hauptkanal angeordnet ist als die Position der Vorrichtung zur Modifizierung von Ethylengas.

9. Frischhaltevorrichtung für ein frisches landwirtschaftliches Produkt gemäß Anspruch 7 oder Anspruch 8, wobei im Lagerhaus eine Kühlmaschine installiert ist, im Hauptkanal an einer höheren mittleren Stelle als eine Position der Vorrichtung zur Modifizierung des Ethylengases ein elektrisches Heizelement installiert ist, eine Feuchtigkeit im Lagerhaus von einem im Lagerhaus in der Nähe installierten Feuchtigkeitssensor festgestellt wird und ein Betrieb des elektrischen Heizelements so geregelt werden kann, dass die Feuchtigkeit in einem eingestellten Bereich auf Basis der unterschiedlichen ermittelten Daten gehalten werden kann.

## Revendications

1. Procédé de modification d'éthylène gazeux avec des rayons ultraviolets, comprenant les étapes de :
rétention d'eau en fournissant de l'eau à un élément de rétention d'eau doté d'une surface de rétention d'eau capable de retenir de l'eau sous forme de particules à sa surface et maintien de ladite surface de rétention d'eau dans un état mouillé par des gouttelettes d'eau ;
irradiation des rayons ultraviolets à une longueur d'ondes de 254 nm vers lesdites gouttelettes d'eau retenues sur ladite surface de rétention d'eau à partir d'une proche distance de l'ordre de 10 mm tout en contrôlant la température voisine dans une plage de température de 10°C à 40°C afin de produire des radicaux OH dans lesdites gouttelettes d'eau avec l'énergie desdits rayons ultraviolets émis ; et
étape de réaction pur l'aération du gaz contenant l'éthylène gazeux vers ladite surface de rétention d'eau retenant lesdites gouttelettes d'eau contenant lesdits radicaux OH pour mettre en contact ledit éthylène gazeux avec lesdits radicaux OH, **caractérisé en ce que** ledit éthylène gazeux est mis en contact et en réaction avec lesdits radicaux OH à travers chacune desdites étapes pour lui permettre d'être modifié en éthane et en eau.

2. Procédé de modification d'éthylène gazeux avec des rayons ultraviolets selon la revendication 1, **caractérisé en ce que** l'élément de rétention d'eau est un élément de rétention d'eau à aération possédant de nombreux trous fins qui traversent ses surfaces antérieure et postérieure, les radicaux OH et l'éthylène gazeux peuvent être mis en contact en faisant passer du gaz contenant l'éthylène gazeux depuis la surface antérieure ou postérieure dudit élément de rétention d'eau vers l'autre surface dans l'étape de réaction.

3. Procédé de modification d'éthylène gazeux selon la revendication 2, **caractérisé en ce que** l'élément de rétention d'eau à aération est composé d'un matériau contenant au moins un groupe de produits tricotés composés de matière fibreuse non organique, un textile tissé et un textile non tissé ou un matériau céramique possédant des trous fins traversants.

4. Dispositif de modification de l'éthylène gazeux pour la mise en oeuvre du procédé de modification de l'éthylène gazeux selon la revendication 1, comprenant :
(a) un élément de rétention d'eau fait d'un matériau ayant une caractéristique hydrophobe pour former une surface de rétention d'eau capable de retenir de l'eau sous forme de particules à la surface ;
(b) des moyens de génération de rayons ultraviolets pour générer des rayons ultraviolets à une longueur d'ondes de 254 nm disposés à une proche distance de l'ordre de 10 mm de ladite surface de rétention d'eau ;
(c) un moyen de contrôle de la température pour contrôler un endroit proche des rayons ultraviolets émis dans une plage de température de 10°C à 40°C ;
(d) un moyen de contention d'eau pour contenir de l'eau sous forme de particules sur ladite surface de rétention d'eau ; et
(e) un moyen d'aération pour faire passer du gaz contenant de l'éthylène gazeux pour le mettre en contact avec les gouttelettes d'eau retenues sur ladite surface de rétention d'eau.

5. Dispositif de modification de l'éthylène gazeux pour la mise en oeuvre du procédé de modification de l'éthylène gazeux selon la revendication 2 ou 3, comprenant :
(a) un élément de rétention d'eau à aération fait d'un matériau ayant une caractéristique hydrophobe pour former une surface de rétention d'eau capable de retenir de l'eau sous forme de particules à la surface et doté de nombreux trous fins traversant sa surface antérieure et sa surface postérieure ;
(b) des moyens de génération de rayons ultraviolets pour produire des rayons ultraviolets à une longueur d'ondes de 254 nm disposés à une proche distance de l'ordre de 10 mm vers ladite surface de rétention d'eau ;
(c) un moyen de contrôle de la température pour contrôler un endroit proche des rayons ultraviolets émis dans une plage de température de 10°C à 40°C ;
(d) un moyen de contention d'eau pour contenir de l'eau sous forme de particules sur ladite surface de rétention d'eau ; et
(e) un moyen d'aération pour faire passer du gaz contenant de l'éthylène gazeux d'une surface antérieure ou postérieure dudit élément de rétention d'eau à travers lesdits trous fins pour le mettre en contact avec les gouttelettes d'eau retenues sur ladite surface de rétention d'eau.

6. Dispositif de préservation de la fraîcheur pour un produit agricole frais avec un dispositif de modification de l'éthylène gazeux selon la revendication 4 ou 5, **caractérisé en ce que** :
le dispositif de modification de l'éthylène gazeux selon la revendication 4 ou 5 est installé dans un entrepôt utilisé pour stocker le produit agricole frais ;
le gaz dans l'entrepôt est mis en circulation à travers les moyens d'aération dudit dispositif de modification de l'éthylène gazeux, l'éthylène gazeux dégagé par le produit agricole stocké dans ledit entrepôt est mis en contact et en réaction avec les radicaux OH produits par l'irradiation de rayons ultraviolets et retenus sur ladite surface de rétention d'eau afin de le transformer en éthane et en eau inoffensifs, de sorte que l'éthylène gazeux nocif dans l'entrepôt est réduit et que la fraîcheur du produit agricole frais peut être préservée pendant une longue période.

7. Dispositif de préservation de la fraîcheur pour un produit agricole frais avec le dispositif de modification de l'éthylène gazeux selon la revendication 4 ou 5, **caractérisé en ce que** :
une conduite de guidage munie d'orifices d'échappement espacés est disposée le long de la partie inférieure près de la paroi latérale dans un entrepôt et une conduite principale verticale est dressée et mise en communication avec ladite conduite de guidage en un point intermédiaire de ladite conduite de guidage, le point supérieur de ladite conduite principale verticale est muni d'un orifice d'entrée, le point de hauteur intermédiaire de ladite conduite principale contient le dispositif de modification de l'éthylène gazeux selon la revendication 4 ou 5 ; et
le gaz dans ledit entrepôt est passé à travers ladite conduite et mis en circulation par le moyen d'aération dudit dispositif de modification de l'éthylène gazeux, l'éthylène gazeux dégagé par un produit agricole stocké dans ledit entrepôt est mis en contact et en réaction avec les radicaux OH produits par l'irradiation des rayons ultraviolets et retenus sur ladite surface de rétention d'eau afin de le transformer en éthane et en eau inoffensifs pour réduire l'éthylène gazeux nocif dans l'entrepôt et permettre de préserver la fraîcheur du produit agricole frais pendant une longue période.

8. Dispositif de préservation de la fraîcheur pour un produit agricole frais selon la revendication 7, dans lequel le moyen d'aération du dispositif de modification de l'éthylène gazeux est une soufflerie disposée à l'orifice d'entrée de la conduite principale et un panneau de filtration de l'éthylène gazeux est disposé au point de hauteur intermédiaire dans la conduite principale plus haut que la position dudit dispositif de modification de l'éthylène gazeux.

9. Dispositif de préservation de la fraîcheur pour un produit agricole frais selon la revendication 7 ou 8, dans lequel une machine frigorifique est installée dans l'entrepôt, un chauffage électrique est installé dans une position intermédiaire dans la conduite principale plus haute qu'une position du dispositif de modification de l'éthylène gazeux, l'humidité dans l'entrepôt est détectée par un capteur d'humidité installé à proximité dans l'entrepôt et le fonctionnement du chauffage électrique peut être contrôlé de telle manière que l'humidité dans l'entrepôt peut être maintenue dans une plage fixe en fonction de données détectées variables.
